Europäisches Patentamt

(19) European Patent Office (11) Publication number: **0 058 172**

Office européen des brevets **B1**

(12) **EUROPEAN PATENT SPECIFICATION**

(45) Date of publication of patent specification: **21.11.85** (51) Int. Cl.⁴: **G 02 B 6/38**

(21) Application number: **81902240.1**

(22) Date of filing: **21.08.81**

(86) International application number:
**PCT/SE81/00233**

(87) International publication number:
**WO 82/00720 04.03.82 Gazette 82/07**

(54) **A METHOD FOR CENTERING AN OPTICAL FIBRE IN A CONTACT.**

(30) Priority: **21.08.80 SE 8005871**

(43) Date of publication of application:
**25.08.82 Bulletin 82/34**

(45) Publication of the grant of the patent:
**21.11.85 Bulletin 85/47**

(84) Designated Contracting States:
**CH DE FR GB LI NL**

(56) References cited:
**EP-A-0 008 643**
**EP-A-0 011 561**
**EP-A-0 014 936**
**DE-A-2 933 033**
**GB-A-1 480 445**
**US-A-4 087 158**
**US-A-4 158 476**
**US-A-4 181 402**
**US-A-4 183 619**
**US-A-4 186 999**
**US-A-4 252 406**

**Electronics Letters, vol. 15, no. 1, 4 January 1979, pages 28-29**

(73) Proprietor: **LIDHOLT, Lars Rune**
**Skogsmyrsvägen 4A**
**S-752 45 Uppsala (SE)**

(72) Inventor: **LIDHOLT, Lars Rune**
**Skogsmyrsvägen 4A**
**S-752 45 Uppsala (SE)**

(74) Representative: **Grennberg, Erik Bertil et al**
**H ALBIHNS PATENTBYRA AB Box 7664**
**S-103 94 Stockholm (SE)**

Courier Press, Leamington Spa, England.

## Description

The invention regards a method for centering an optical fibre in a contact having a longitudinal hole provided therefor, as recited in the preamble of the claim.

The problem of centering an optical fibre in a connector, where the connector is provided with its centering surfaces for coupling to another connector, is known in the art. It is also known in the art to utilize balls as centering means for a fibre. Examples of the use of balls as centering means are the connectors shown in US—A—4,181,402 and US—A—4,158,476. In those connectors, three balls are held together with their centers in a plane perpendicular to the fibre, with the fibre fitted in the interstitial space formed by the balls. The balls are held captured in place, either by an outer resilient spring sleeve against a plane surface having an opening for the fibre, as in the first-mentioned patent, or by being embraced by a circular race, as in the second-mentioned patent. The centering function for the fibres is performed directly by the balls, two such tricusps fitting precisely against each other in a nesting fashion, so that the interstices of the tricusps fall precisely on line, thus centering the fibres theoretically very precisely.

It is an object of the present invention to obtain a rugged precision fibre connector system, where the mating of contacts is made by means of precision centering surfaces giving a positive and reliable mechanical centering by using contacts working with mating surfaces of right conical shape. This principle is known per se in the art, e.g. from US—A—4,087,158 and DE—A—2,933,033.

The present invention is directed toward the centering of an optical fibre relative to such a mating surface of frustoconical form. A detailed description of problems involved in connecting optical fibres is given in my Swedish Patent Applications 8003467-1 and 8003509-0.

By way of summary, it can be noted that the problem of jointing with connectors is to have a small losses as possible of the optical radiation, preferably less than 1 dB per joint. This requirement means that a detachable connector must be able to achieve centering between two fibres within 5 μm for example when the fibre core is about 50 μm.

The present invention addresses itself to the problem of mounting a fibre with satisfactory precision so that it is disposed on the axis of an external conical surface in such a connector member. The connector member is designed to be so functionally simple that it can meet military requirements for shock and temperature, i.e. −55° to +125°C.

This problem is solved, according to the present invention, by means of a method as recited in the appended claim.

The invention and its background in the state of the art will now be described with reference to the drawings, where Fig. 1 and Fig. 2 show illustrative devices for explaining the inventive problem. Fig. 3 shows an embodiment of apparatus for practising the method of the invention.

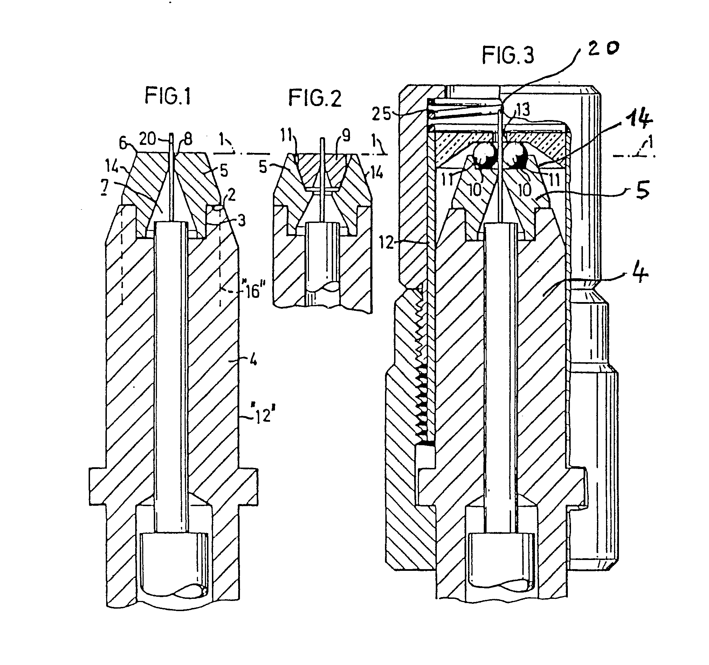

In the first illustrative device shown in Fig. 1, an optical fibre 20, which has two different protective jackets, is stripped off at one end which is inserted into a connector member 4. Since similar connector members have been described in my previous above-mentioned applications, the form thereof need not be described in detail. It should suffice to say that the connector member 4 has suitably a shoulder 2 for pressing against another connector member, possibly via an intermediate spring, and that it is suitable at the end opposite to the fibre end to fix the jacketed fibre by crimping, gluing or the like.

The device has a centering piece 5, which is mounted on the point of the connector member 4. It has an external conical surface 14 terminating in a truncation along a circle 6, which defines a plane 1. Even though for the sake of illustration the fibre 20 is shown protruding, in the finished connection it is to be optically planar in the plane 1.

The centering piece is inserted into a hole in the end of the connector member 4 which has a forced fit against the cylindrical surface 3 of the centering piece. The centering piece is pressed in until contact is made with the shoulder 2.

According to this first illustrative device, the centering of the fibre 20 to the centre of the circle 6 is accomplished by having a hole 8 in the centering piece, said hole being precision-centered to a tolerance of 2 μm for a gradient index core of diameter 50 μm.

In assembly, the fibre is dipped into a thermosetting plastic, e.g. UV-setting, and is then inserted into the hole. Additional thermosetting plastic is then possibly added from outside. When the plastic has set, the fibre is ground down to the surface 1 and is polished. It is most suitable to use a set of grinding fixtures into which the outer cone 5 fits and which make it possible to grind and polish against a set of flat abrasive films. The product used was Locktite® Multi-Bond, which is a two-component product. Thermosetting plastics with high viscosity also have a centering effect.

As shown schematically in Fig. 1, the centering piece can either be adapted to a connector member which is somewhat thicker and is designated pin No. 12 according to the MIL-specifications for electrical equipment, or to a somewhat thinner pin designated No. 16 and which is considered to be suitable for multi-pole connectors for connecting bundles comprising a plurality of separate optical fibres.

Fig. 2 shows a second illustrative device, in which the centering means consists of a small cone 9 of plastic, metal or the like, which has a hole central to an external conical surface. This cone fits into an interior conical hole 11 which is provided concentrically inside the exterior cone 14 and opens outwards. In order to obtain elastic abutment against the fibre, the cone can be made in elastomer material or in hard material with longitudinal slots through the cone.

Fig. 3 shows a device for practising the method of the invention, in which the centering means, except for an interior conical hole 11 of in principle the same type as in the second illustrative device, consists of a number of balls 10, e.g. three. As was mentioned above in the introduction, it is known per se to use balls to centre an optical fibre. However, in many cases, the balls are arranged relatively far from the surface 1 and behind said surface. The guide points can then in practice hardly be kept sufficiently close to the surface 1 to prevent angular misalignment from producing an excessive error at the surface 1.

It is known, as previously stated, to arrange a coupling by means of three projecting balls fitting against three similar projecting balls in another member which are rotated 60° about the axis of symmetry. This is, however, foreign to the purpose of the present invention, which intends to use balls to centre a fibre in relation to an interior cone and in an accessible plane 1. In order to make the plane for centering accessible, e.g. for cleaning the end surface of the fibre, it is necessary to first fix the balls and the fibre in place by means of thermosetting resin for example, and then grinding down the balls and the plastic to the plane 1. When the contact is finished, only about half of the balls will remain.

According to the embodiment of Fig. 3, a special sleeve 12 of metal or UV-transmitting plastic, for example, is used when the casting is done. It is suitable prior to use, and preferably in the delivered, unassembled connector, to leave the sleeve and balls assembled, thus holding the balls in place. During assembly the sleeve is lifted somewhat to facilitate the introduction of the fibre, whereafter plastic is introduced via the sleeve hole 13, and the sleeve is then again pressed down thus pressing with one surface the balls against the wall of the conical hole 11 and the fibre 20. After the plastic has hardened and the grinding has been completed, the sleeve can be used as a protector until the member has been connected. If UV-setting plastic has been used, balls of glass with high quartz content can be used to advantage.

It is also possible to remove the balls before grinding is done, because they are not held fast by a recess.

It is noted that the cross-sectional view in Fig. 3 is schematic, inter alia to the extent that a central section with three balls 10 would not actually show two balls in the same sectional plane. However, this method of drawing, although not exact, is designed to illuminate the example in the best manner. Furthermore, the example is not limited to only the case with three balls, even if it is preferred. Four balls, for example, can be used. The sleeve 12 can be provided with a spring insert 25, shown in Fig. 3, to make the abutment properly hard and independent of the force of the assembling person or machine.

Furthermore it is suitable, as far as regards the examples according to Figs. 2—3, to make the interior conical hole 11 with the same conic angle as the external cone 14. This makes it possible to turn the surface 14 and the surface 11 in one operation, by means of cutting edges moved in the same direction, whereby the axes of the cones coincide because they coincide with the axis of rotation of the workpiece.

The centering piece used in the invention can be made of brass or stainless steel, the latter being preferable in view of its resistance to corrosion. UV-transparent or other plastic can sometimes be advantageous for rapid assembly of simpler members.

It is noted that the exterior conical surface is terminated at a circle which defines an end plane. This does not prevent it being possible that this circle is located somewhat outside the finished body, since one may wish to round off the transition between the cone 5 and the plane 1, which of course does not, however, change the principle of the invention and its central point, namely that the centering is to take place in the plane 1, i.e. at the outer end. According to the invention, where balls are used, it can also occur that these contact points with the fibre do not fall exactly in the plane 1, inter alia because of measurement tolerances in the manufactured parts. This does not affect the relationship either that the centering occurs essentially in the plane for the outer end of the centering piece.

**Claim**

A method for centering an optical fibre (20) in a contact (4, 5) having a longitudinal hole provided therefor, which contact is provided at a front end with an exterior centering surface (14) having a frustoconical form opening rearwardly, to the axis of which the fibre is to be centered, as well as with an interior frustoconical hole or space (11) opening forwardly, the axis of which concides with said axis of said centering surface, in which method said optical fibre is centered by introducing it in said longitudinal hole with one end of said fibre protruding outwardly into said interior frustoconical hole, by arranging a number of balls (10) in said interior frustoconical hole around the fibre end in contact therewith and with the wall of said interior frustoconical hole, and by fixing in place the balls and the fibre thus centered, characterized in that after the balls and fibre have been centered to said axis and fixed, preferably by means of a hardenable plastic, the balls and the fibre are ground down from said front end until only about half of each ball remains.

**Patentanspruch**

Verfahren zum Zentrieren einer optischen Faser (20) in einem Kontaktstück (4, 5) mit einer dafür vorgesehenen longitudinalen Öffnung, wobei das Kontaktstück am anderen Ende eine äußere Zentrierfläche (14) mit einer sich nach hinten zur Zentrierachse der Faser erweiternden konischen Form sowie einen sich nach vorne öffnenden kegelstumpfförmigen Innenraum (11) oder eine kegelstumpfförmige Öffnung aufweist deren Achse mit der Achse der Zentrierfläche zusammenfällt, wobei gemäß dem Verfahren die optische Faser durch Einführen in die Longitudinale Öffnung, wobei sich ein Ende der Faser nach außen in den kegelstumpfförmigen Innenraum erstreckt, durch Anordnen einer Anzahl von Kugeln (10) im kegelstumpfförmigen Innenraum rings um das Ende das Faser, die die Faser und Wand des kegelstumpfförmigen Innenraums berühren, und durch Festlegen der Kugeln und der Faser zentriert wird, dadurch gekennzeichnet, daß nach der Zentrierung zur Achse und Festlegung, vorzugsweise mit einem aushärtbaren Kunststoff, der Kugeln und der Faser, die Kugeln und die Fasern vom vorderen Ende her bis etwa zur Hälfte jeder Kugel abgeschliffen werden.

**Revendication**

Procédé pour centrer une fibre optique (20) dans un contact (4, 5) pourvu d'un trou longitudinal à cet effet, ledit contact possédant à une extrémité frontale une surface de centrage extérieure (14) possédant une forme tronconique s'évasant vers l'arrière par rapport à l'axe de laquelle la fibre doit être centrée, et un trou ou espace tronconique intérieur (11) s'ouvrant vers l'avant dont l'axe coïncide avec ledit axe de ladite surface de centrage, procédé dans lequel on centre ladite fibre optique en l'introduisant dans ledit trou longitudinal avec une extrémité de ladite fibre saillant vers l'extérieur dans ledit tronconique intérieur, en prévoyant une pluralité de billes (10) dans ledit trou tronconique intérieur autour de l'extrémité de la fibre en contact avec elle et avec la paroi dudit trou tronconique intérieur et en fixant en place les billes et la fibre ainsi centrées, caractérisé par le fait qu'après que les billes et la fibre aient été centrées par rapport audit axe et fixées, de préférence au moyen d'une matière plastique durcissable, les billes et la fibre sont meulées depuis ladite extrémitéfrontale jusqu'à ce que environ la moitié de chaque bille subsiste.

FIG.1   FIG.2   FIG.3